# EUROPEAN PATENT APPLICATION

(11) **EP 2 589 326 A1**
(43) Date of publication of application: **08.05.2013**
(21) Application number: 10853840.6
(22) Date of filing: 30.06.2010
(51) Int. Cl.: A47L 11/38, B08B 3/02

(54) **AUTOMATIC CLEANING MACHINE FOR WALL PLATES**

(71) Applicant: Liao, Fuchang, Miaoli Hsien (TW)
(72) Inventor: Liao, Fuchang, Miaoli Hsien (TW)
(74) Representative: Becker Kurig Straus
(86) International application number: PCT/CN2010/000987
(87) International publication number: WO 2012/000133

(57) **Abstract**

An automatic cleaning machine for wall plates is disclosed. Multiple long axial long axial tracks (10) with the same direction are fixed in a parallel and array pivoted way on the circumference or the plate face of the object to be cleaned. Water-guiding pipes (101) are formed on the long axial long axial tracks (10) which are provided with electric rails (1041), and multiple magnetic valves (30) are provided on the pipe walls of the water-guiding pipes (101) in a spaced way. The long axial long axial tracks (10) are provided with sliding frames (20). The sliding frames (20) are provided with conducting brackets (205) corresponding to the electric rails (1041), and provided with long axial magnetic-attracted bodies (1051) opposed to the magnetic valves (30) to turn on or off the cleaning water with a magnetic force. Brush drive mechanisms (60) are provided on the sliding frames (20), and the shaft levers (601) of the brush drive mechanisms (60) are arranged in a direction normal to the long axial long axial tracks (10) and combined with long axial brushes (50) to scrub wall plates. Cover plates (70) are provided outside the long axial brushes (50). The automatic cleaning machine can be used for cleaning the plate faces of external walls, glasses and solar panels.

## Description

### 1. Field of the Invention

The present invention relates to a cleaning device, and more particularly to a cleaning device for automatically cleaning a wall plate.

### 2. Description of the Related Art

Exterior cleaning is the process of cleaning the exterior walls or windows of a building, thereby maintaining the cleanliness of the building's exterior. A typical method of cleaning a building's exterior is by supporting maintenance personnel on a suspended scaffold as the maintenance personnel manually clean the building's exterior.

Solar panel cleaning is the process of cleaning a solar panel, thereby maximizing solar panel efficiency. A typical method of cleaning a solar panel is done manually by maintenance personnel.

However, both the above methods of cleaning a building's exterior and a solar panel are operated manually, which increases labor costs. To overcome the shortcomings, the present invention provides an automatic cleaning machine for wall plates to mitigate or obviate the aforementioned problems.

The present invention provides an automatic cleaning machine for wall plates that reduces labor costs.

An automatic cleaning machine for wall plates in accordance with the present invention comprises at least two long axial tracks, at least two sliding frames, at least two bristle drive mechanisms and at least one long axial brush. The long axial tracks are arranged parallel and are secured to a wall plate and each long axial track is an extrusion. The sliding frames are mounted on corresponding long axial tracks and each sliding frame is slid along the long axial track by a main drive mechanism. Each bristle drive mechanism is mounted on one of the sliding frames. Each of the at least one long axial brush is vertical to the long axial tracks, is mounted between two adjacent bristle drive mechanisms and is driven by the two bristle drive mechanisms. Each of the at least one long axial brush includes a plurality of bristles configured to selectively contact the wall plate.

The automatic cleaning machine for wall plates as above mentioned, wherein each bristle drive mechanism is mounted on a holder and the holder is mounted on one of the sliding frames, each bristle drive mechanism includes two rotating shaft levers being vertical to the long axial tracks, each of the at least one long axial brush is mounted between the rotating shaft levers of the two adjacent bristle drive mechanisms, and the bristles of the at least one long axial brush may be soft bristles.

The automatic cleaning machine for wall plates as above mentioned further comprises a cover plate covering the at least one long axial brush.

The automatic cleaning machine for wall plates as above mentioned, wherein each bristle drive mechanism is a linear actuator and includes a longitudinally reciprocating shaft lever being vertical to the long axial tracks, and each of the at least one long axial brush is mounted between the longitudinally reciprocating shaft levers of the two adjacent bristle drive mechanisms.

The automatic cleaning machine for wall plates as above mentioned, wherein each bristle drive mechanism has a shaft hole formed longitudinally therein and each long axial brush has a shaft hole formed longitudinally therein in alignment with the shaft holes of the bristle drive mechanisms, a shaft is inserted into the shaft holes of the bristle drive mechanisms and the at least one long axial brush, and the bristle drive mechanisms are actuated to move the at least one long axial brush in reciprocating longitudinal movement.

The automatic cleaning machine for wall plates as above mentioned, wherein a telescopic drive unit has two ends, one end is connected to one of the bristle drive mechanisms and the other end is pivotally connected to one of the sliding frames, and the telescopic drive unit is controlled to make the bristles selectively contact the wall plate.

The automatic cleaning machine for wall plates as above mentioned further comprises a cover plate covering the at least one long axial brush, a separator mounted between the cover plate and the at least one long axial brush and having a plurality of ventilation holes, and an air duct is formed between the separator and the cover plate.

The automatic cleaning machine for wall plates as above mentioned, wherein each long axial track includes a longitudinal fastening groove and a nut corresponds to and is received in the fastening groove to secure the long axial track to the wall plate.

The automatic cleaning machine for wall plates as above mentioned, wherein each long axial track includes a plurality of longitudinal roller rails and a plurality of rollers are rotatably mounted on each sliding frame and slidably mounted in the roller rails.

The automatic cleaning machine for wall plates as above mentioned, wherein an electric rail is secured to each long axial track and each sliding frame includes a conducting bracket corresponding to the electric rail.

The automatic cleaning machine for wall plates as above mentioned, wherein each long axial track includes a longitudinal water-guiding pipe and a longitudinal magnet rail, the magnet rail is adjacent to the water-guiding pipe, a plurality of spaced apart magnetic valves are mounted on the long axial tracks, and a long axial magnetic-attracted body is slidably mounted in the magnet rail with one of the sliding frames to control a corresponding magnetic valve.

The automatic cleaning machine for wall plates as above mentioned, wherein each magnetic valve includes a tube, a magnetic rod, a spring, a sealing gasket and a magnetic plate. The tube has an inner surface, a tubular chamber, a plurality of recesses and a plurality of inflow holes. The tubular chamber has an open end and a closed end. The recesses are formed longitudinally in the inner surface of the tube. The inflow holes are formed radially through the tube and each inflow hole communicates with one of the recesses. The magnetic rod is mounted through the spring and disposed in the tubular chamber. The sealing gasket and the magnetic plate are secured at the open end of the tubular chamber in sequence. The sealing gasket has a hole and the magnetic plate has a hole. The spring biases the magnetic rod to close the holes of the sealing gasket and the magnetic plate.

The automatic cleaning machine for wall plates as above mentioned, wherein a toothed strip is secured to each long axial track and each main drive mechanism is mounted on one of the sliding frames and has a shaft connected to a gear engaging the toothed strip.

The automatic cleaning machine for wall plates as above mentioned, wherein two rods are vertical to the long axial tracks and are rotatably disposed at two ends of the long axial track, a plurality of spools are mounted on each rod and each spool corresponds to one end of one of the long axial tracks, a pulling element is mounted between each spool and a corresponding sliding frame, and an auxiliary drive mechanism is connected to and rotates each rod.

In summary, the present invention is an automatic cleaning machine for wall plates for cleaning a cleaning object such as an exterior wall, a window or a solar panel. The long axial tracks are arranged parallel and are secured to the cleaning object. Each long axial track includes a longitudinal water-guiding pipe. The spaced apart magnetic valves are mounted on the long axial tracks. One electric rail is secured to each long axial track. The sliding frames are mounted on corresponding long axial tracks. Each sliding frame includes one conducting bracket corresponding to the electric rail. One long axial magnetic-attracted body is slidably mounted on one of the long axial tracks to control a corresponding magnetic valve in order to open or close a path for the cleaning water. One bristle drive mechanism is mounted on one of the sliding frames. Each bristle drive mechanism includes a shaft lever being vertical to the long axial tracks and connected to the long axial brush. The long axial brush is used to clean the object to be cleaned. The cover plate covers the long axial brush. Owing to the automatic nature of the cleaning device, labor costs are reduced.

Other objectives, advantages and novel features of the invention will become more apparent from the following detailed description when taken in conjunction with the accompanying drawings.

### IN THE DRAWINGS:

FIG. 1 is a perspective view of a first embodiment of an automatic cleaning machine for wall plates in accordance with the present invention;
FIG. 2 is a perspective view of the first embodiment of the automatic cleaning machine for wall plates in FIG. 1 without a cover plate;
FIG. 3 is an enlarged partially exploded perspective view of the first embodiment of the automatic cleaning machine for wall plates in FIG. 1;
FIG. 4 is an enlarged exploded perspective view of a magnetic valve of the first embodiment of the automatic cleaning machine for wall plates in FIG. 1;
FIG. 5 is an enlarged side view of a long axial track of the first embodiment of the automatic cleaning machine for wall plates in FIG. 1;
FIG. 6 is an enlarged partial side view of the first embodiment of the automatic cleaning machine for wall plates in FIG. 1;
FIG. 7 is an enlarged partial perspective view of the first embodiment of the automatic cleaning machine for wall plates in FIG. 1 showing a connection between a spool and a pulling element;
FIG. 8 is a perspective view of a second embodiment of an automatic cleaning machine for wall plates in accordance with the present invention;
FIG. 9 is a perspective view of the second embodiment of the automatic cleaning machine for wall plates in FIG. 8 without a cover plate;
FIG. 10 is an enlarged partial exploded perspective view of the second embodiment of the automatic cleaning machine for wall plates in FIG. 8;
FIG. 11 is an enlarged partial side view of the second embodiment of the automatic cleaning machine for wall plates in FIG. 8; and
FIG. 12 is an enlarged partial perspective view of the second embodiment of the automatic cleaning machine for wall plates in FIG. 8 showing that a telescopic drive unit is extended to push a bristle drive mechanism.

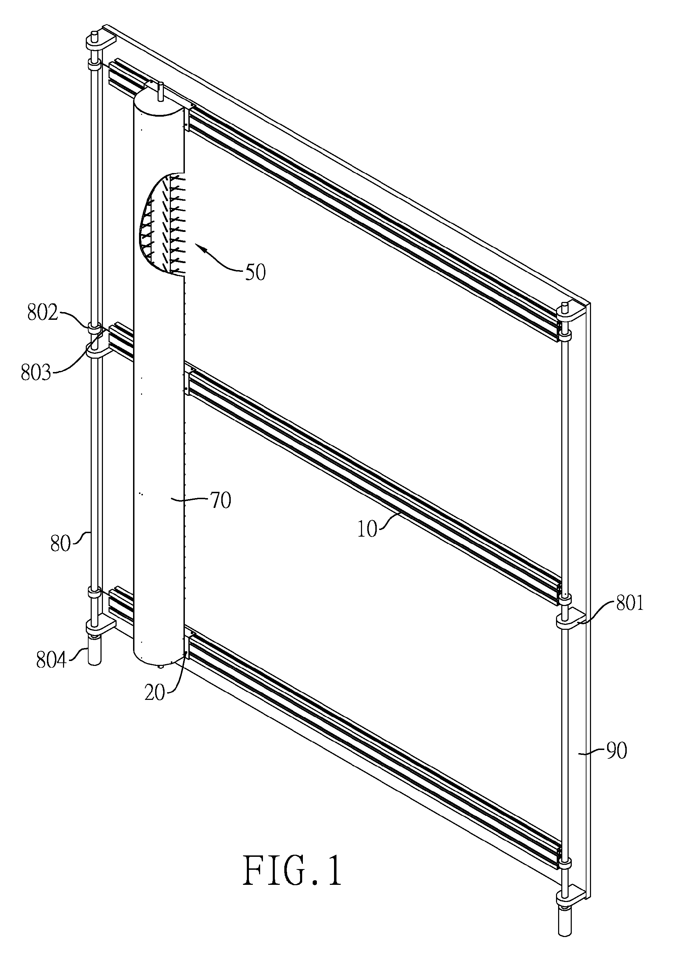

With reference to FIGS. 1 to 3, a first embodiment of an automatic cleaning machine for wall plates in accordance with the present invention comprises at least two long axial tracks 10, a plurality of magnetic valves 30, at least two sliding frames 20, at least two bristle drive mechanisms 60, at least one long axial brush 50 and a cover plate 70.

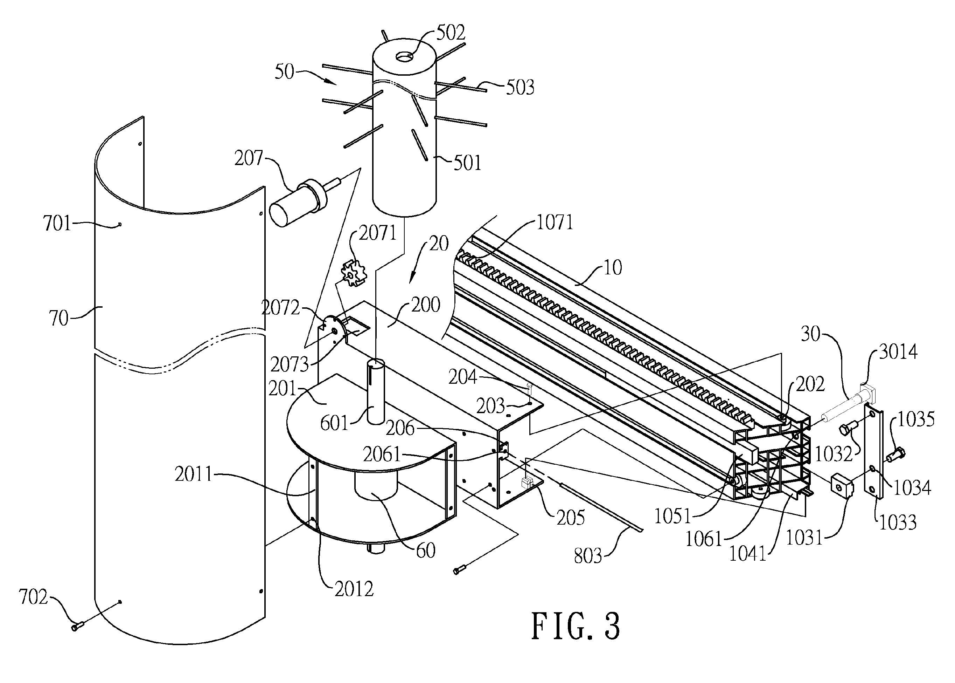

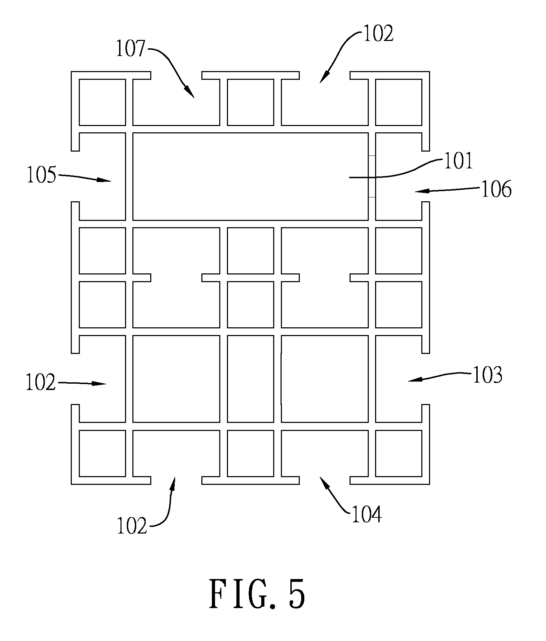

With reference to FIGS. 3 and 5, each long axial track 10 is a rectangular aluminum extrusion and includes four side surfaces, a longitudinal water-guiding pipe 101, three longitudinal roller rails 102, a longitudinal fastening groove 103, a longitudinal electric rail mounting groove 104, a longitudinal magnet rail 105, a longitudinal magnetic valve mounting groove 106 and a longitudinal toothed strip mounting groove 107. Each roller rail 102 is formed in one of the side surfaces of the long axial track 10. An electric rail 1041 is secured in the electric rail mounting groove 104 and has one end electrically connected to a power supply. The magnet rail 105 and the magnetic valve mounting groove 106 are adjacent to the water-guiding pipe 101. A long axial magnetic-attracted body 1051 is slidably mounted in the magnet rail 105. The magnetic valve mounting groove 106 communicates with the water-guiding pipe 101 through a plurality of magnetic valve bores 1061. The magnetic valve bores 1061 are spaced apart from one another by equal distances. A toothed strip 1071 is secured in the toothed strip mounting groove 107 and has a toothed upper surface being exposed.

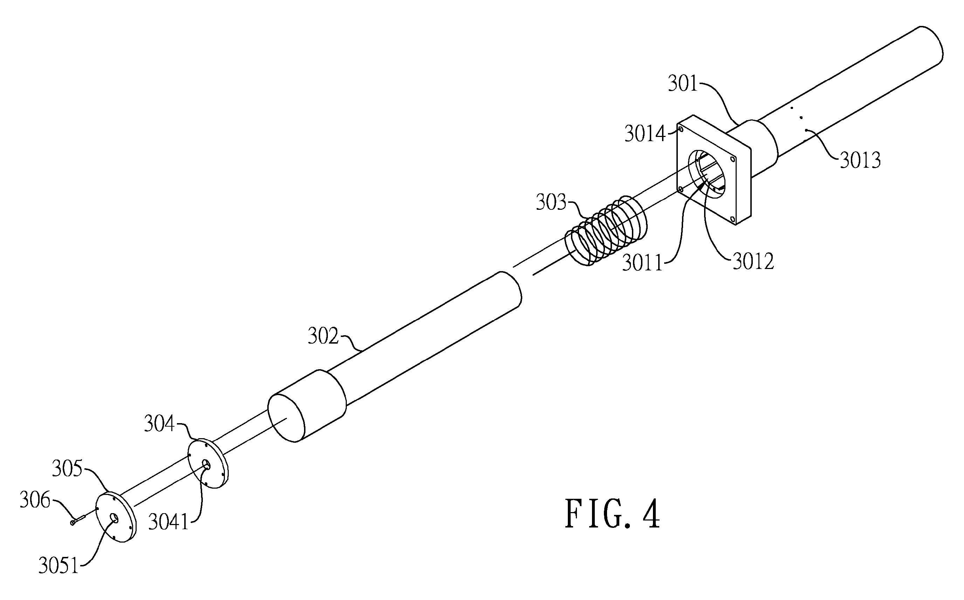

With reference to FIGS. 3 and 4, the magnetic valves 30 are mounted on the long axial tracks 10, and each magnetic valve 30 includes a tube 301, a magnetic rod 302, a spring 303, a sealing gasket 304 and a magnetic plate 305. The tube 301 is inserted through one of the magnetic valve bores 1061 of the long axial tracks 10 and has an inner surface, a tubular chamber 3011, a plurality of recesses 3012 and a plurality of inflow holes 3013. The tubular chamber 3011 has an open end, a closed end, a large diameter portion and a small diameter portion. The large diameter portion of the tubular chamber 3011 is formed at the open end. The small diameter portion of the tubular chamber 3011 is formed at the closed end. The recesses 3012 are formed longitudinally in the inner surface of the tube 301. The inflow holes 3013 are formed radially through the tube 301 and each inflow hole 3013 communicates with one of the recesses 3012. Screws are mounted through screw holes 3014 of the tube 301 and engage the long axial track 10 to secure the magnetic valve 30 to the long axial track 10. The magnetic rod 302 undergoes an anti-rust treatment and a hardening treatment and has a large diameter portion and a small diameter portion. The magnetic rod 302 is disposed in the tubular chamber 3011. The large diameter portion of the magnetic rod 302 has an outer diameter corresponding to an inner diameter of the large diameter portion of the tubular chamber 3011. The small diameter portion of the magnetic rod 302 has an outer diameter corresponding to an inner diameter of the small diameter portion of the tubular chamber 3011. The spring 303 has an inner diameter corresponding to the outer diameter of the small diameter portion of the magnetic rod 302. The spring 303 is mounted around the small diameter portion of the magnetic rod 302 and is disposed in the large diameter portion of the tubular chamber 3011. The sealing gasket 304 and the magnetic plate 305 are secured at the open end of the tubular chamber 3011 in sequence by screws 306. The sealing gasket 304 has a central hole 3041. The magnetic plate 305 has a central hole 3051. The spring 303 biases the large diameter portion of the magnetic rod 302 to close the central holes 3041, 3051 of the sealing gasket 304 and the magnetic plate 305.

With reference to FIG. 3, the sliding frames 20 are mounted on the long axial tracks 10 and each long axial track 10 has at least one sliding frame 20 thereon. Each sliding frame 20 is slid along the long axial track 10 by a main drive mechanism 207 and includes a bracket 200 and a plurality of rollers 202. The bracket 200 covers a corresponding long axial track 10 and has a front panel, an upper panel, a lower panel, three pivot holes 203, two push tabs 206, a drive mechanism mounting tab 2072 and a gear receiving opening 2073. The pivot holes 203 are formed through the front panel, upper panel and lower panel respectively and correspond to the roller rails 102 of the long axial track 10. The two tabs 206 extend from two ends of the front panel of the bracket 200 and correspond to the magnet rail 105 of the long axial track 10. The long axial magnetic-attracted body 1051 in the magnet rail 105 is disposed between the tabs 206. Each tab 206 has a pulling element mounting hole 2061. The drive mechanism mounting tab 2072 extends from the front panel of the bracket 200. The main drive mechanism 207 is mounted on the drive mechanism mounting tab 2072 and has a shaft connected to a gear 2071. The gear receiving opening 2073 is formed through the upper panel of the bracket 200 and corresponds to the toothed strip 1071 on the long axial track 10. The gear 2071 is disposed in the gear receiving opening 2073 and engages the toothed strip 1071. Each roller 202 is slidably mounted in one of the roller rails 102 of the long axial track 10. An axle member 204 extends through one of the pivot holes 203 of the bracket 200 and one of the rollers 202 to rotatably mount the roller 202 on the bracket 200. A conducting bracket 205 is mounted on an inner surface of the lower panel of the bracket 200 and corresponds to the electric rail 1041 on the long axial track 10. The conducting bracket 205 is electrically connected to the electric rail 1041 to supply power to the main drive mechanism 207 and the bristle drive mechanisms 60.

Each bristle drive mechanism 60 is mounted on a holder 201. The holder 201 is mounted on the bracket 200 of one of the sliding frames 20 and has a back panel, a semi-circular top panel, a semi-circular bottom panel and a plurality of support members 2011. The back panel is secured to an outer surface of the front panel of the bracket 200. The semi-circular top panel and the semi-circular bottom panel are separated with a distance by the back panel. Each of the semi-circular top panel and the semi-circular bottom panel has a mounting hole. The support members 2011 are attached between the semi-circular top panel and the semi-circular bottom panel. Each support member 2011 has at least one fastening hole 2012. Each bristle drive mechanism 60, which may be cylindrical in shape, is mounted between the semi-circular top panel and the semi-circular bottom panel of the holder 201 of one of the sliding frames 20 and includes two ends and two rotating shaft levers 601. Each rotating shaft lever 601 extends from one of the ends of the bristle drive mechanism 60 and is mounted through one of the mounting holes of the semi-circular top panel and the semi-circular bottom panel of the holder 201. The rotating shaft levers 601 are vertical to the long axial tracks 10.

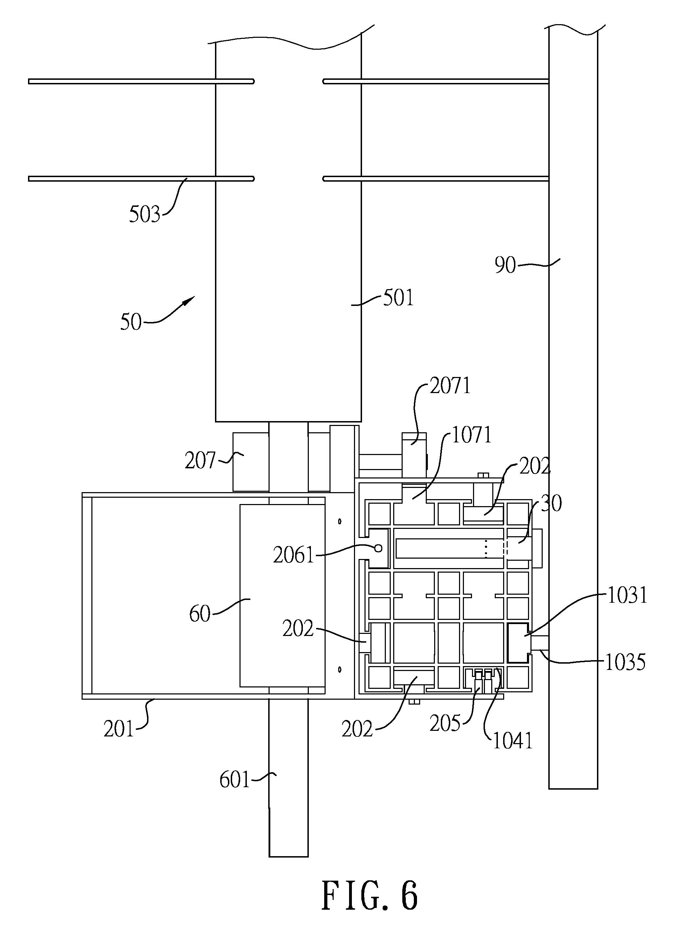

With reference to FIGS. 3 and 6, each of the at least one long axial brush 50 is vertical to the long axial tracks 10, is rotatably mounted between two adjacent bristle drive mechanisms 60 and is driven by the two adjacent bristle drive mechanisms 60. Each of the at least one long axial brush 50 includes a tubular member 501 and a plurality of bristles 503. The tubular member 501 has an outer surface, two ends and two shaft holes 502. Each shaft hole 502 is formed longitudinally in one of the ends of the tubular member 501 for receiving one of the rotating shaft levers 601 of one of the two adjacent bristle drive mechanisms 60. The bristles 503 extend from the outer surface of the tubular member 501 and preferably are soft bristles.

With reference to FIG. 3, the cover plate 70 covers the bristle drive mechanisms 60 and long axial brush 50 and includes a plurality of fastening holes 701 in alignment with the fastening holes 2012 of the support members 2011 of the holders 201 of the sliding frames 20. Screws 702 extend through the fastening holes 701 of the cover plate 70 and engage the fastening holes 2012 of the sliding frames 20 to secure the cover plate 70 to the holders 201. The cover plate 70 may be a curved board having a semi-circular cross section and include an inner diameter greater than the rotation diameter of the long axial brush 50.

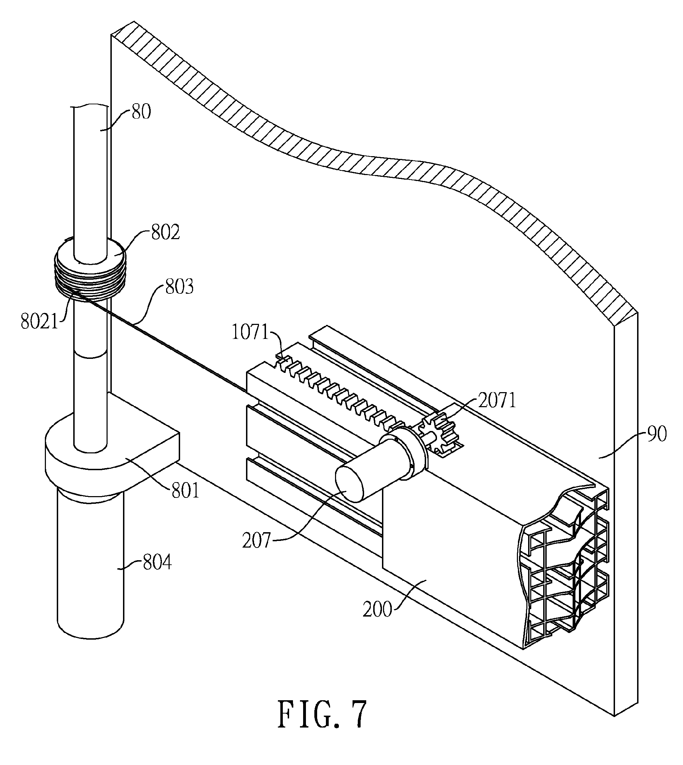

With reference to FIGS. 1 to 6, the first embodiment of the automatic cleaning machine for wall plates of the present invention is applied in a building exterior wall plate 90. The long axial tracks 10 are level and parallel to one another and are secured to the exterior wall plate 90. A nut 1031 corresponds to and is received in the fastening groove 103 of each long axial track 10. An elongated connecting piece 1033 has three screw bores 1034 arranged in a line. One screw 1035 extends through the central screw bore 1034 and is screwed into the nut 1031 to secure the connecting piece 1033 to the long axial track 10. Two screws 1032 extend through the other two screw bores 1034 and engage the exterior wall plate 90 to secure the long axial track 10 to the exterior wall plate 90. Conduits from a pump or water pipeline are put in communication with the water-guiding pipes 101 of the long axial tracks 10. The connection between the conduits and the water-guiding pipes 101 is conventional and thus a detailed description thereof will be omitted. In the case illustrated in the drawings, there are three long axial tracks 10 on the exterior wall plate 90, one sliding frame 20 on each long axial track 10, one bristle drive mechanism 60 on each sliding frame 20 and one long axial brush 50 between each two adjacent bristle drive mechanisms 60. The sliding frames 20 and the long axial brushes 50 are arranged in a line, which is vertical to the long axial tracks 10. In addition, there may be one electric rail 1041 on each long axial track 10 and one conducting bracket 205 on each sliding frame 20, or only one electric rail 1041 on one of the long axial tracks 10 and only one conducting bracket 205 on one of the sliding frames 20. The at least one electric rail 1041 and the at least one conducting bracket 205 supply power to the main drive mechanisms 207 and the bristle drive mechanisms 60. The shaft holes 502 of each long axial brush 50 receive the rotating shaft levers 601 of two adjacent bristle drive mechanisms 60. Furthermore, two rods 80 are rotatably attached to the exterior wall plate 90 by a plurality of bearing seats 801. The two rods 80 are vertical to the long axial tracks 10 and are disposed at two ends of the long axial tracks 10. A plurality of spools 802 are mounted on each rod 80 and each spool 802 corresponds to one end of one of the long axial tracks 10. With reference to FIG. 7, each spool 802 has a helical groove 8021 on its outer surface and an end of a pulling element 803 is wound in the helical groove 8021. The other end of the pulling element 803 is secured in the pulling element mounting hole 2061 of one of the tabs 206 of the bracket 200 of the sliding frame 20, which is adjacent to the spool 802. The pulling element 803 may be a steel rope or chain or the like. An auxiliary drive mechanism 804 is connected to and rotates each rod 80. The connection of the rod 80 and the auxiliary drive mechanism 804 may be conventional and thus a detailed description thereof will be omitted.

With reference to FIGS. 1 to 6, when the first embodiment of the present invention is in use, the cleaning water is conducted into the water-guiding pipe 101 of each long axial track 10. The main drive mechanisms 207 or the auxiliary drive mechanisms 804 are then actuated to simultaneously move the sliding frames 20 and the long axial brushes 50 along the long axial tracks 10. The bristle drive mechanisms 60 can be actuated to rotate the long axial brushes 50. The rotating long axial brushes 50 create centrifugal force to cause the bristles 503 to contact the exterior wall plate 90. The push tabs 206 of the bracket 200 of each sliding frame 20 move the long axial magnetic-attracted body 1051 along the magnet rail 105 of the long axial track 10. When the sliding frame 20 moves the long axial magnetic-attracted body 1051 toward one of the magnetic valves 30, the long axial magnetic-attracted body 1051 will attract the magnetic rod 302 to open a gap between the magnetic rod 302 and the sealing gasket 304. The cleaning water in the water-guiding pipe 101 thus flows, in sequence, through the inflow holes 3013, the recesses 3012 and the central holes 3041, 3051 and is then sprayed on the exterior wall plate 90. When the sliding frame 20 moves the long axial magnetic-attracted body 1051 away from the magnetic valve 30, the spring 303 will bias the magnetic rod 302 and the magnetic plate 305 will attract the magnetic rod 302 to close the gap between the magnetic rod 302 and the sealing gasket 304. The cleaning water in the water-guiding pipe 101 thus cannot flow out. The gap between the magnetic rod 302 and the sealing gasket 304 can be closed by either the biasing force of the spring 303 or the attractive force between the magnetic plate 305 and the magnetic rod 302, or alternatively, the gap between the magnetic rod 302 and the sealing gasket 304 can be closed by both the biasing force of the spring 303 and the attractive force between the magnetic plate 305 and the magnetic rod 302 as shown in the drawings. The attractive force between the long axial magnetic-attracted body 1051 and the magnetic rod 302 is greater than either the attractive force between the magnetic plate 305 and the magnetic rod 302 or the biasing force of the spring 303, or alternatively, the attractive force between the long axial magnetic-attracted body 1051 and the magnetic rod 302 is greater than the sum of the attractive force between the magnetic plate 305 and the magnetic rod 302 and the biasing force of the spring 303. In addition, the cover plate 70 can collect the cleaning water during the cleaning process and the collected cleaning water can thus be drained from a bottom of the cover plate 70. The cover plate 70 also provides a protective effect and aesthetic appearance. With the above-mentioned structure, the exterior wall plate 90 can be easily cleaned.

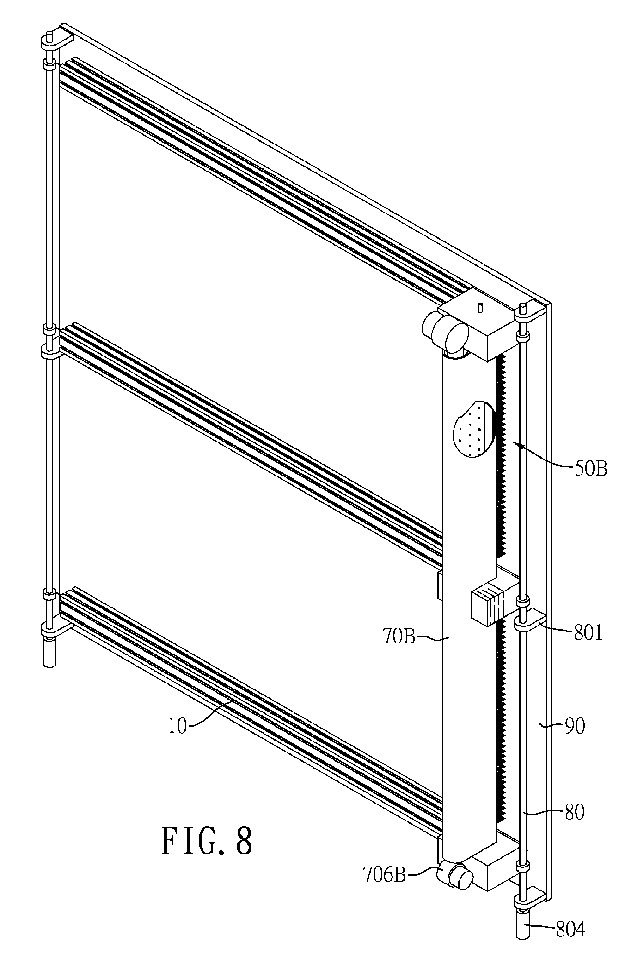

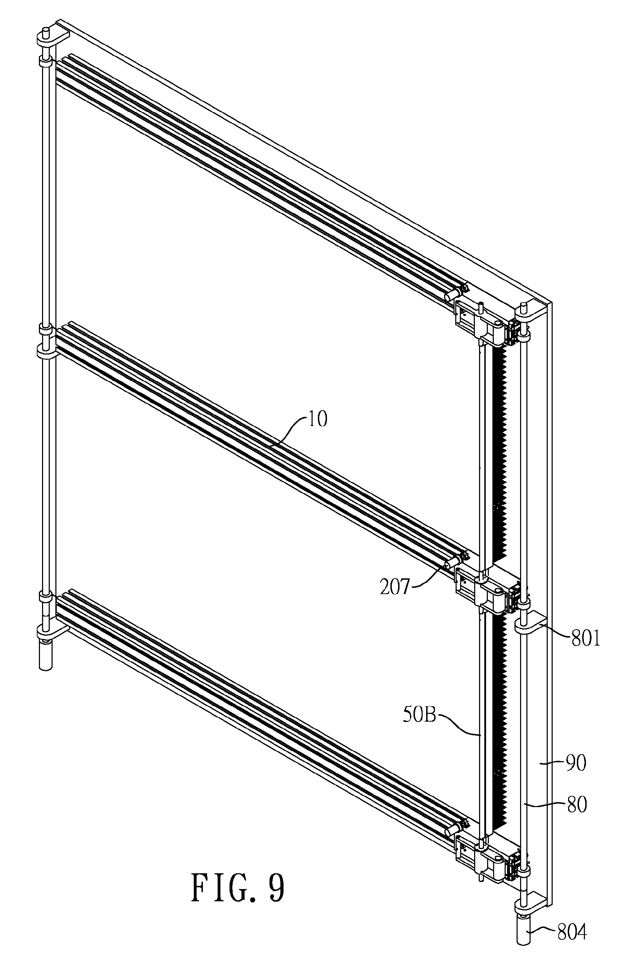

With reference to FIGS. 8 to 10, same as the first embodiment, a second embodiment of the present invention comprises the parallel long axial tracks 10 attached to an exterior wall plate 90 and the sliding frames 20 slid along the long axial tracks 10. The second embodiment is different from the first embodiment in that the bristle drive mechanisms 60 of the first embodiment rotate the long axial brushes 50 but the bristle drive mechanisms 60B of the second embodiment move the long axial brushes 50B in reciprocating longitudinal movement. The rotating long axial brushes 50 of the first embodiment are applied to cleaning the exterior wall plate 90 with a rough surface. The longitudinally reciprocating long axial brushes 50B of the second embodiment are applied to cleaning the exterior wall plate 90 with a flat surface and are applied in a situation in which there is a long distance between two adjacent sliding frames 20.

The second embodiment of the present invention comprises at least two long axial tracks 10, a plurality of magnetic valves 30, at least two sliding frames 20, at least two bristle drive mechanisms 60B, at least one long axial brush 50B and a cover plate 70B.

With reference to FIG. 4, the magnetic valve 30 of the second embodiment is the same as the magnetic valve 30 of the first embodiment and thus a detailed description thereof will be omitted.

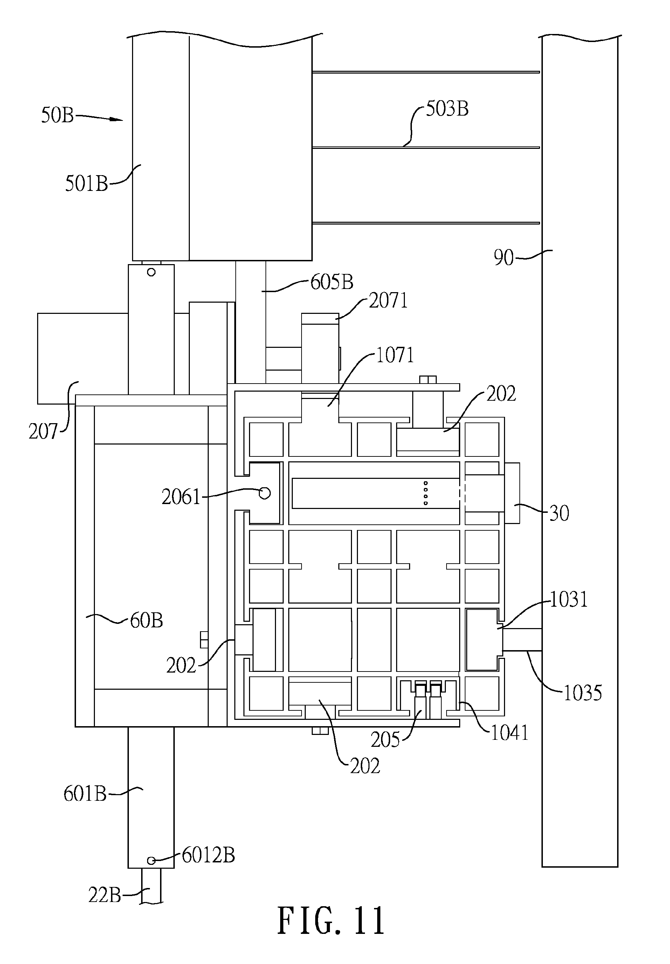

With reference to FIGS. 3, 5, 10 and 11, the long axial track 10 and the sliding frame 20 of the second embodiment are the same as the long axial track 10 and the sliding frame 20 of the first embodiment and thus detailed descriptions thereof will be omitted.

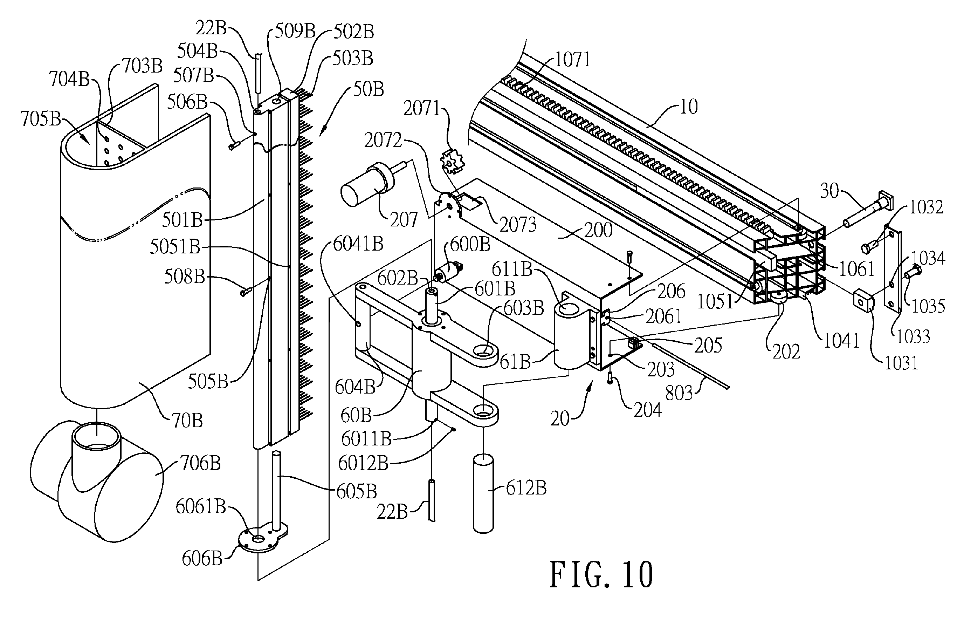

With reference to FIG. 10, each bristle drive mechanism 60B, which may be cylindrical in shape, is a pneumatic or electric linear actuator and includes two ends and a longitudinally reciprocating shaft lever 601B. The longitudinally reciprocating shaft lever 601B is vertical to the long axial tracks 10 and has a shaft hole 602B formed longitudinally therein. Two pairs of lugs extend radially from opposite sides of the bristle drive mechanism 60B. Each pair has two lugs being at a top end and a bottom end of the bristle drive mechanism 60B. Each lug of one pair has a pivot hole 603B formed through a distal end thereof. A pivot seat 61 B is secured to the outer surface of the front panel of the bracket 200 by screws. The pivot seat 61B has a through hole 611B formed longitudinally therein in alignment with the pivot holes 603B. A pivot rod 612B is inserted into the pivot holes 603B and the through hole 611B of the pivot seat 61B to pivotally connect the bristle drive mechanism 60B to the pivot seat 61B. A connecting rod 604B is rotatably mounted between the lugs of the other pair. The connecting rod 604B has a middle section and a connecting hole 6041B. The connecting hole 6041B is formed radially in the middle section of the connecting rod 604B. A telescopic drive unit 600B has two ends, one end is inserted into the connecting hole 6041B and the other end is rotatably connected to the outer surface of the front panel of the bracket 200. Two support members are mounted on the ends of the bristle drive mechanism 60B. Each support member has a brace 605B and a base board 606B. The base board 606B is secured to the bristle drive mechanism 60B and has two ends. One end of the base board 606B has a hole 6061B through which the longitudinally reciprocating shaft lever 60 1 B extends. The brace 605B is vertical to the base board 606B and extends from the other end of the base board 606B toward the long axial brush 50B.

Each of the at least one long axial brush 50B includes a mount 501B and a bristle structure 502B. The mount 501B is elongated and has two side surfaces, two end surfaces, a shaft hole 504B, a plurality of connecting holes 505B and two insertion holes 509B. The shaft hole 504B is formed longitudinally through the mount 501B. The connecting holes 505B are formed in the side surfaces of the mount 501B. Each insertion hole 509B is formed longitudinally in one of the end surfaces of the mount 501B for receiving one of the braces 605B. The bristle structure 502B is elongated to correspond to the length of the mount 501B. The bristle structure 502B has a front surface, a rear surface, a plurality of bristles 503B and a plurality of connecting holes 5051B. The bristles 503B extend from the rear surface of the bristle structure 502B. The connecting holes 5051B are formed in the front surface of the bristle structure 502B in alignment with the connecting holes 505B of the mount 501B. Screws 508B extend through the connecting holes 505B of the mount 501B and engage the connecting holes 5051B of the bristle structure 502B to secure the mount 501B to the bristle structure 502B.

The cover plate 70B is a board having a U-shaped cross section. The cover plate 70B serves to protect the long axial brush 50B. A separator 703B is mounted between the cover plate 70B and the long axial brush 50B and has a plurality of ventilation holes 704B. An air duct 705B is formed between the separator 703B and the cover plate 70B.

With reference to FIGS. 5, 8, 9, 10 and 11, the second embodiment of the automatic cleaning machine for wall plates of the present invention is applied in a building exterior wall plate 90. The long axial tracks 10 are level and parallel to one another and are secured to the exterior wall plate 90. The long axial tracks 10 are secured to the exterior wall plate 90 in the same manner as in the first embodiment of the present invention. Conduits from a pump or water pipeline are put in communication with the water-guiding pipes 101 of the long axial tracks 10. In the case illustrated in the drawings, there are three long axial tracks 10 on the exterior wall plate 90, one sliding frame 20 on each long axial track 10, one bristle drive mechanism 60B on each sliding frame 20 and one long axial brush 50B between each two adjacent bristle drive mechanisms 60B. The shaft holes 504B of the long axial brushes 50B align with the shaft holes 602B of the bristle drive mechanisms 60B. A shaft 22B is inserted into the shaft holes 602B, 504B of the bristle drive mechanisms 60B and the long axial brushes 50B for connecting the long axial brushes 50B and the bristle drive mechanisms 60B. The shaft 22B may be a steel rope, round steel bar, flat steel bar or tube or the like. The long axial brushes 50B and shaft 22B are secured together by screws 506B extending through holes 507B in the long axial brushes 50B and abutting the shaft 22B. The bristle drive mechanisms 60B and shaft 22B are secured together by screws 6012B extending through holes 6011B in the longitudinally reciprocating shaft levers 60 1 B of the bristle drive mechanisms 60B and abutting the shaft 22B. The bristles 503B of the long axial brushes 50B face toward the exterior wall plate 90.

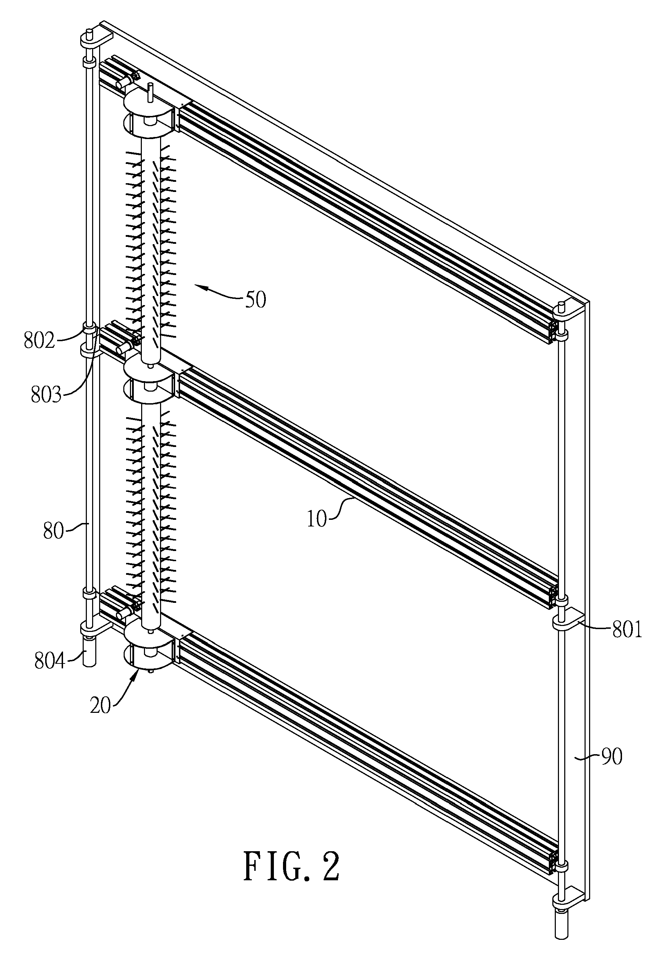

The long axial brushes 50B are arranged in a line, which is vertical to the long axial tracks 10. The cover plate 70B is secured to the sliding frames 20. At least one blower 706B is attached adjacent to the air duct 705B. Preferably, two blowers 706B are attached to two opposite ends of the air duct 705B. The outlets of the blowers 706B communicate with the air duct 705B. The attachment method of the blowers 706B may be conventional and thus a detailed description thereof will be omitted. In addition, two rods 80 are attached to the exterior wall plate 90 and are disposed at two ends of the long axial track 10. An auxiliary drive mechanism 804 is connected to each rod 80. The auxiliary drive mechanism 804 can rotate the rod 80 to move the sliding frames 20. With reference to FIGS. 2 and 7, the auxiliary drive mechanism 804 moves the sliding frames 20 in the same manner as in the first embodiment of the present invention.

With reference to FIGS. 8, 9, 10 and 11, when the second embodiment of the present invention is in use, the cleaning water is conducted into the water-guiding pipe 101 of each long axial track 10. The main drive mechanisms 207 or the auxiliary drive mechanisms 804 are then actuated to simultaneously move the sliding frames 20 and the long axial brushes 50B along the long axial tracks 10. The telescopic drive unit 600B can be controlled to make its shaft retracted therewithin such that the bristles 503B of the long axial brushes 50B can abut the exterior wall plate 90. The bristle drive mechanisms 60B can be actuated to move the long axial brushes 50B in reciprocating longitudinal movement. The push tabs 206 of the bracket 200 of each sliding frame 20 move the long axial magnetic-attracted body 1051 along the magnet rail 105 of the long axial track 10. When the sliding frame 20 moves the long axial magnetic-attracted body 1051 toward one of the magnetic valves 30, the long axial magnetic-attracted body 1051 will attract the magnetic rod 302 to allow the cleaning water to be sprayed on the exterior wall plate 90. When the sliding frame 20 moves the long axial magnetic-attracted body 1051 away from the magnetic valve 30, the spring 303 will bias the magnetic rod 302 and the magnetic plate 305 will attract the magnetic rod 302 to stop the cleaning water from flowing out. The cover plate 70B can collect the cleaning water during the cleaning process. The blowers 706B can be operated after the cleaning process to blow air through the air duct 705B and out of the ventilation holes 704B so as to remove water drops on the exterior wall plate 90. The cover plate 70B also provides a protective effect and aesthetic appearance.

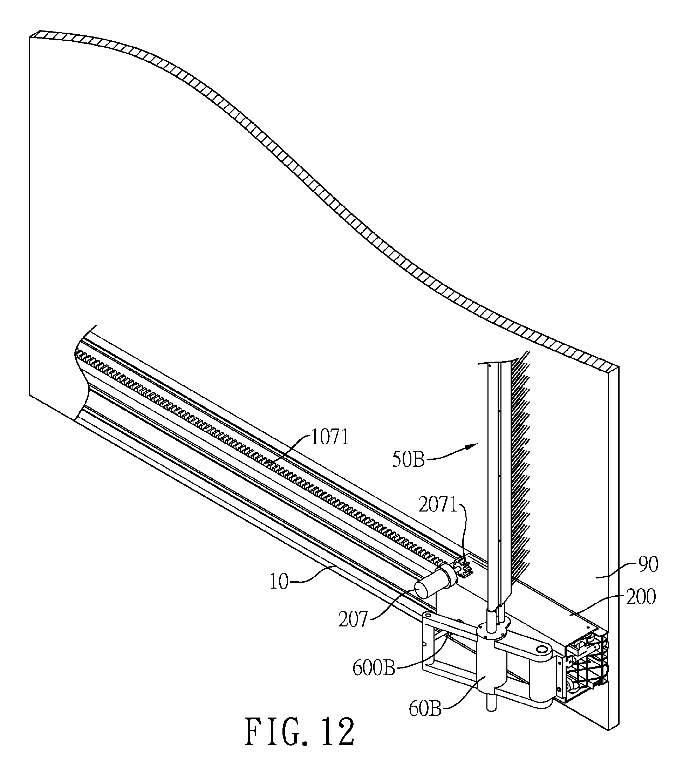

In addition, the long axial tracks 10 are made of oxidation resistant material. The long axial brushes 50B can be disposed at sides of the building when the cleaning device does not operate. With reference to FIG. 12, the shaft of the telescopic drive unit 600B is extended to push the bristle drive mechanism 60B such that the bristles 503B of the long axial brushes 50B are away from the exterior wall plate 90, thereby preventing the bristles 503B from being deformed.

Even though numerous characteristics and advantages of the present invention have been set forth in the foregoing description, together with details of the structure and features of the invention, the disclosure is illustrative only. Changes may be made in the details, especially in matters of shape, size and arrangement of parts within the principles of the invention to the full extent indicated by the broad general meaning of the terms in which the appended claims are expressed.

## Claims

1. An automatic cleaning machine for wall plates **characterized in that**
the automatic cleaning machine for wall plates comprises
at least two long axial tracks (10) arranged parallel and adapted to be secured to a wall plate and each long axial track (10) being an extrusion structure;
at least two sliding frames (20) mounted on corresponding long axial tracks (10) and each sliding frame (20) slid along the long axial track (10) by a main drive mechanism (207);
at least two bristle drive mechanisms (60) mounted on corresponding sliding frames (20); and
at least one long axial brush (50) being vertical to the long axial tracks (10), and each one of the at least one long axial brush (50) mounted between two adjacent bristle drive mechanisms (60), driven by the two adjacent bristle drive mechanisms (60) and including a plurality of bristles (503) configured to selectively contact the wall plate.

2. The automatic cleaning machine for wall plates as claimed in claim 1, wherein each bristle drive mechanism (60) is mounted on a holder (201) and the holder (201) is mounted on one of the sliding frames (20), each bristle drive mechanism (60) includes two rotating shaft levers (601) being vertical to the long axial tracks (10), and each one of the at least one long axial brush (50) is mounted between the rotating shaft levers (601) of the two adjacent bristle drive mechanisms (60).

3. The automatic cleaning machine for wall plates as claimed in claim 2 further comprising a cover plate (70) covering the at least one long axial brush (50).

4. The automatic cleaning machine for wall plates as claimed in claim 1, wherein each bristle drive mechanism (60B) is a linear actuator and includes a longitudinally reciprocating shaft lever (601B) being vertical to the long axial tracks (10), and each one of the at least one long axial brush (50B) is mounted between the longitudinally reciprocating shaft levers (601B) of the two adjacent bristle drive mechanisms (60B).

5. The automatic cleaning machine for wall plates as claimed in claim 4, wherein each bristle drive mechanism (60B) has a shaft hole (602B) formed longitudinally therein and each long axial brush (50B) has a shaft hole (504B) formed longitudinally therein in alignment with the shaft holes (602B) of the bristle drive mechanisms (60B), a shaft (22B) is inserted into the shaft holes (602B, 504B) of the bristle drive mechanisms (60B) and the at least one long axial brush (50B), and the bristle drive mechanisms (60B) are actuated to move the at least one long axial brush (50B) in reciprocating longitudinal movement.

6. The automatic cleaning machine for wall plates as claimed in claim 4 or 5, wherein a telescopic drive unit (600B) has two ends, one end is connected to one of the bristle drive mechanisms (60B) and the other end is pivotally connected to one of the sliding frames (20), and the telescopic drive unit (600B) is controlled to make the bristles (503B) selectively contact the wall plate.

7. The automatic cleaning machine for wall plates as claimed in claim 6 further comprising a cover plate (70B) covering the at least one long axial brush (50B), a separator (703B) mounted between the cover plate (70B) and the at least one long axial brush (50B) and having a plurality of ventilation holes (704B), and an air duct (705B) formed between the separator (703B) and the cover plate (70B).

8. The automatic cleaning machine for wall plates as claimed in any claim of claims 1 to 7, wherein each long axial track (10) includes a longitudinal fastening groove (103) and a nut (1031) corresponds to and is received in the fastening groove (103) to secure the long axial track (10) to the wall plate.

9. The automatic cleaning machine for wall plates as claimed in claim 8, wherein each long axial track (10) includes a plurality of longitudinal roller rails (102) and a plurality of rollers (202) are rotatably mounted on each sliding frame (20) and slidably mounted in the roller rails (102).

10. The automatic cleaning machine for wall plates as claimed in claim 9, wherein an electric rail (1041) is secured to each long axial track (10) and each sliding frame (20) includes a conducting bracket (205) corresponding to the electric rail (1041).

11. The automatic cleaning machine for wall plates as claimed in claim 10, wherein each long axial track (10) includes a longitudinal water-guiding pipe (101) and a longitudinal magnet rail (105), the magnet rail (105) is adjacent to the water-guiding pipe (101), a plurality of spaced apart magnetic valves (30) are mounted on the long axial tracks (10), and a long axial magnetic-attracted body (1051) is mounted in the magnet rail (105) and is slid with one of the sliding frames (20) to control a corresponding magnetic valve (30).

12. The automatic cleaning machine for wall plates as claimed in claim 11, wherein each magnetic valve (30) includes
a tube (301) having:
an inner surface;
a tubular chamber (3011) having an open end and a closed end;
a plurality of recesses (3012) formed longitudinal in the inner surface of the tube (301); and
a plurality of inflow holes (3013) formed radially through the tube (301) and each inflow hole (3013) communicating with one of the recesses (3012);
a magnetic rod (302) mounted through a spring (303) and disposed in the tubular chamber (3011); and
a sealing gasket (304) and a magnetic plate (305) secured at the open end of the tubular chamber (3011) in sequence, the sealing gasket (304) having a hole (3041) and the magnetic plate (305) having a hole (3051), and the spring (303) biasing the magnetic rod (302) to close the holes (3041, 3051) of the sealing gasket (304) and the magnetic plate (305).

13. The automatic cleaning machine for wall plates as claimed in claim 12, wherein a toothed strip (1071) is secured to each long axial track (10) and each main drive mechanism (207) is mounted on one of the sliding frames (20) and has a shaft connected to a gear (2071) engaging the toothed strip (1071).

14. The automatic cleaning machine for wall plates as claimed in claim 13, wherein two rods (80) are vertical to the long axial tracks (10) and are rotatably disposed at two ends of the long axial tracks (10), multiple spools (802) are mounted on each rod (80) and each spool (802) corresponds to one end of one of the long axial tracks (10), a pulling element (803) is mounted between each spool (802) and a corresponding sliding frame (20), and an auxiliary drive mechanism (804) is connected to and rotates each rod (80).
